# EUROPEAN PATENT APPLICATION

(11) **EP 4 729 581 A1**
(43) Date of publication of application: **22.04.2026**
(21) Application number: 24823251.4
(22) Date of filing: 31.05.2024
(51) Int. Cl.: C08L 101/00, C08K 5/103, C08L 101/16

(54) **PLASTICIZER, COMPOSITION, AND MOLDED ARTICLE**

(30) Priority: 13.06.2023 JP 2023097293
(71) Applicant: ADEKA CORPORATION, Arakawa-ku Tokyo 116-8554 (JP)
(72) Inventor: MURAKAMI, Takashi, Tokyo 116-8554 (JP); NAKAMURA, Tatsuhito, Tokyo 116-8554 (JP); ASAKAWA, Motoko, Tokyo 116-8554 (JP)
(74) Representative: Forstmeyer, Dietmar
(86) International application number: PCT/JP2024/020074
(87) International publication number: WO 2024/257631

(57) **Abstract**

An object of the present invention is to provide a plasticizer that imparts excellent plasticity to a biodegradable resin, a composition containing the plasticizer, and a shaped article. The present invention provides a plasticizer containing a dibenzoate compound represented by a general formula (1) below, having a hydroxyl value of 0.1 to 20 mg KOH/g, and being for use in a biodegradable resin. In the formula, R¹ represents an alkanediyl group having 1 to 8 carbon atoms, and n represents an integer of 1 to 8. R¹ preferably represents an alkylene group having 2 or 3 carbon atoms, and n preferably represents an integer of 1 to 3.

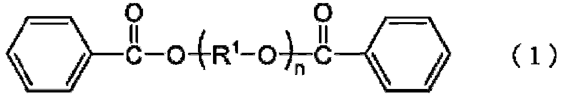

## Description

### Technical field

The present invention relates to a plasticizer, a composition containing the plasticizer, and a shaped article obtained from the composition.

### Background Art

In recent years, there has been an increasing demand for biodegradable resins, which decompose in natural environments such as soil and oceans, and for shaped articles obtained therefrom, and active research has been conducted on biodegradable resins such as aliphatic polyesters. In particular, polylactic acid resin, which has a high melting point enabling melt molding and exhibits excellent transparency, is widely expected to be used in packaging materials and in shaped articles and the like that take advantage of its transparency.

However, polylactic acid resin has high crystallinity and lacks flexibility, and therefore cannot be used in applications, such as films and packaging materials, where flexibility is required. A known method for improving flexibility is the addition of a plasticizer. For example, Patent Literature 1 discloses a technique involving the blending of a polypropylene glycol dibenzoate plasticizer into a lactic acid-based polymer. Patent Literature 2 proposes a plasticizer for a lactic acid-based polymer, the plasticizer being composed of polyethylene glycol dibenzoate having a number-average molecular weight of 150 or more.

### Citation List

### Patent Literature

Patent Literature 1: JP 2000-136300A
Patent Literature 2: JP 2003-105182A

### Summary of Invention

### Technical Problem

However, as a result of investigations conducted by the inventors of the present invention, it was found that the plasticizers disclosed in Patent Literature 1 and Patent Literature 2 have room for improvement in terms of plasticity.

An object of the present invention is to provide a plasticizer that imparts excellent plasticity to a biodegradable resin, a composition containing the plasticizer, and a shaped article.

### Solution to Problem

As a result of further research, the inventors of the present invention found that a plasticizer containing polyalkylene glycol and having a hydroxyl value within a specific range imparts excellent plasticity to a biodegradable resin, thus achieving the present invention.

The present invention provides a plasticizer containing a dibenzoate compound represented by a general formula (1) below, having a hydroxyl value of 0.1 to 20 mg KOH/g, and being for use in a biodegradable resin.

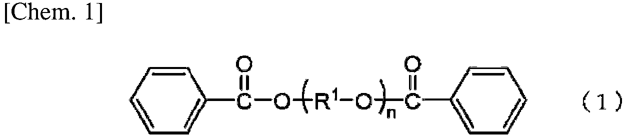

In the formula, R¹ represents an alkanediyl group having 1 to 8 carbon atoms, and n represents an integer of 1 to 8.

In the plasticizer of the present invention, it is preferable that R¹ in the general formula (1) represents an alkylene group having 2 or 3 carbon atoms.

In the plasticizer of the present invention, it is preferable that n in the general formula (1) represents an integer of 1 to 3.

The present invention also provides a composition containing a biodegradable resin and the plasticizer.

In the composition of the present invention, it is preferable that a content of the plasticizer is 0.1 to 50 parts by mass relative to 100 parts by mass of the biodegradable resin.

The present invention also provides a shaped article obtained from the composition.

### Advantageous Effects of Invention

According to the present invention, it is possible to provide a plasticizer that imparts excellent plasticity to a biodegradable resin, a composition containing the plasticizer, and a shaped article.

### Description of Embodiments

The present invention relates to a plasticizer, a composition, and a shaped article. Hereinafter, the present invention will be described based on preferred embodiments thereof.

### Plasticizer

The plasticizer of the present invention contains a dibenzoate compound represented by a general formula (1) below.

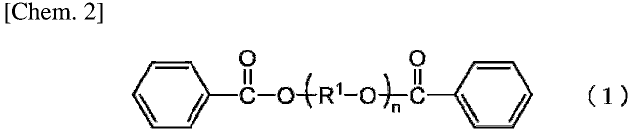

In the formula, R¹ represents an alkanediyl group having 1 to 8 carbon atoms, and n represents an integer of 1 to 8.

It is preferable that the plasticizer of the present invention has a hydroxyl value within a specific range. From the viewpoint of plasticity, the hydroxyl value is preferably 0.1 mg KOH/g or more, more preferably 0.3 mg KOH/g or more, even more preferably 0.5 mg KOH/g or more, and particularly preferably 1 mg KOH/g or more. Furthermore, from the viewpoint of heat resistance and plasticity, the hydroxyl value is preferably 20 mg KOH/g or less, more preferably 15 mg KOH/g or less, even more preferably 10 mg KOH/g or less, and particularly preferably 7 mg KOH/g or less. The hydroxyl value can be determined in accordance with the method specified in JIS K 1557.

The plasticizer of the present invention exhibits the effect of imparting excellent plasticity to biodegradable resins. The reason for this effect is not clear, but is surmised as follows.

Generally, plasticizers penetrate between resin molecules, weakening the intermolecular forces within the resin and increasing the mobility of individual molecular chains. As a result, the glass transition temperature of the resin is lowered, and plasticity is imparted to the resin. The plasticizer of the present invention has a polyoxyalkylene structure, which is the structure shown in the parentheses of the general formula (1), and has a hydroxyl value within a specific range. These characteristics enable the plasticizer to exhibit moderate affinity for molecules of the biodegradable resin, facilitating penetration between resin molecules, and to moderately suppress formation of strong bonds, such as hydrogen bonds, which form between hydroxyl groups derived from the plasticizer and atoms derived from the biodegradable resin. Consequently, excellent plasticity can be imparted to the resin. This effect is particularly pronounced when the plasticizer is combined with a characteristic structure found in biodegradable resins, such as a polyester structure or a polyvinyl alcohol structure.

Examples of the alkanediyl group having 1 to 8 carbon atoms represented by R¹ in the general formula (1) include alkylene groups such as a methylene group, an ethylene group, a propylene group, a butylene group, a pentylene group, a hexylene group, a heptylene group, and an octylene group; and alkylidene groups such as an ethylidene group, a propylidene group, a butylidene group, and a hexylidene group. The alkanediyl group may be linear or branched. The alkanediyl group may include isomers.

In particular, from the viewpoint of heat resistance and plasticity, the alkanediyl group is preferably an alkylene group having 2 to 4 carbon atoms, such as an ethylene group, a propylene group, or a butylene group, more preferably an alkylene group having 2 or 3 carbon atoms, such as an ethylene group or a propylene group, even more preferably a propylene group, and particularly preferably a 1,2-propylene group.

From the viewpoint of heat resistance and plasticity, n in the general formula (1) is preferably an integer of 1 to 4, more preferably an integer of 1 to 3, even more preferably an integer of 2 or 3, and particularly preferably 2.

Examples of the compound represented by the general formula (1) include ethylene glycol dibenzoate, diethylene glycol dibenzoate, triethylene glycol dibenzoate, polyethylene glycol dibenzoate, propylene glycol dibenzoate, dipropylene glycol dibenzoate, tripropylene glycol dibenzoate, polypropylene glycol dibenzoate, butylene glycol dibenzoate, dibutylene glycol dibenzoate, tributylene glycol dibenzoate, neopentyl glycol dibenzoate, and the like.

Among these, from the viewpoint of heat resistance and plasticity, ethylene glycol dibenzoate, diethylene glycol dibenzoate, triethylene glycol dibenzoate, propylene glycol dibenzoate, dipropylene glycol dibenzoate, and tripropylene glycol dibenzoate are preferred; ethylene glycol dibenzoate, diethylene glycol dibenzoate, propylene glycol dibenzoate, and dipropylene glycol dibenzoate are more preferred; diethylene glycol dibenzoate and dipropylene glycol dibenzoate are even more preferred; and dipropylene glycol dibenzoate is particularly preferred.

The content of the compound represented by the general formula (1) in the plasticizer of the present invention is preferably 50 parts by mass or more, more preferably 80 parts by mass or more, even more preferably 90 parts by mass or more, and particularly preferably 95 parts by mass or more, relative to 100 parts by mass of the plasticizer. This allows the plasticizing effect of the plasticizer to be sufficiently achieved.

The compound represented by the general formula (1) can be produced using a conventionally known production method. For example, benzoic acid or a benzoic acid derivative may be reacted with a glycol corresponding to the structure shown in the parentheses of the general formula (1). Specifically, for example, direct esterification of benzoic acid with a glycol, transesterification of methyl benzoate with a glycol, or reaction of a benzoic acid halide with a glycol can be carried out. The compound represented by the general formula (1), obtained using any of the above-described methods or other methods, may, if necessary, be further separated and purified using a separation and purification means such as filtration, concentration, distillation, extraction, crystallization, recrystallization, adsorption, or column chromatography, or a combination thereof.

The plasticizer of the present invention is preferably used in a biodegradable resin, since it readily exhibits its plasticizing effect therein. Examples of the biodegradable resin include those exemplified as the biodegradable resin contained in the composition described later. Among such biodegradable resins, use in a polylactic acid resin is preferred because the effect of enhancing plasticity can be sufficiently obtained.

### Composition

The composition of the present invention contains a biodegradable resin and the above-described plasticizer.

Examples of the biodegradable resin include microbially produced resins, naturally derived resins, and chemically synthesized resins.

Microbially produced resins include polyhydroxyalkanoates and the like.

Naturally derived resins include cellulose derivatives, starch derivatives, and the like.

Chemically synthesized resins include polyester-based biodegradable resins, such as polylactic acid resin, polybutylene succinate, polybutylene succinate adipate, polybutylene adipate terephthalate, polyethylene succinate, polyglycolic acid, polycaprolactone, and poly(3-hydroxybutyrate-co-hydroxyhexanoate); hydroxyl group-containing biodegradable resins, such as polyvinyl alcohol; partially acetylated cellulose-based resins; and the like. In particular, chemically synthesized resins are preferred because the effect of enhancing plasticity can be sufficiently obtained, and among these, polyester-based biodegradable resins are more preferred, and polylactic acid resin is particularly preferred.

The following describes a case in which polylactic acid resin is used as the biodegradable resin.

Examples of the polylactic acid resin used in the present invention include polylactic acid homopolymers, polylactic acid copolymers, and blend polymers of polylactic acid homopolymers and polylactic acid copolymers.

The polylactic acid resin preferably has a weight-average molecular weight (Mw) of 50,000 to 500,000, and more preferably 100,000 to 250,000, in terms of polystyrene equivalents as measured by gel permeation chromatography analysis. This is because polylactic acid resin having a weight-average molecular weight within the above-described range exhibits excellent physical properties and ease of shaping. Specific examples of such polylactic acid include the "Ingeo" series manufactured by NatureWorks LLC, the "Luminy" series manufactured by Total Corbion PLA, and the like.

In addition, the composition mole ratio (L/D) of L-lactic acid units to D-lactic acid units in the polylactic acid resin is not particularly limited, and can be selected from a range of 100/0 to 0/100. To obtain a polylactic acid resin composition having a high melting point, it is preferable that either the L-lactic acid units or the D-lactic acid units account for 75 mol% or more. To obtain a polylactic acid resin composition having an even higher melting point, it is preferable that either the L-lactic acid units or the D-lactic acid units account for 90 mol% or more.

Furthermore, in the polylactic acid resin, lactic acid monomer or lactide may be copolymerized with other components capable of copolymerization. Examples of the other components include dicarboxylic acids having two or more ester bond-forming functional groups, polyhydric alcohols, hydroxycarboxylic acids, and lactonic acids, as well as various polyesters, polyethers, polycarbonates, and the like composed of these components.

The dicarboxylic acids include succinic acid, adipic acid, azelaic acid, sebacic acid, terephthalic acid, isophthalic acid, and the like.

The polyhydric alcohols include aromatic polyhydric alcohols such as adducts of bisphenol and ethylene oxide; aliphatic polyhydric alcohols such as ethylene glycol, propylene glycol, butanediol, hexanediol, octanediol, glycerin, sorbitan, trimethylolpropane, and neopentyl glycol; ether glycols such as diethylene glycol, triethylene glycol, polyethylene glycol, and polypropylene glycol; and the like.

The hydroxycarboxylic acids include glycolic acid, hydroxybutyric acid, hydroxybutylcarboxylic acid, hydroxypentanoic acid, hydroxycaproic acid, hydroxyheptanoic acid, and the like.

The lactonic acids include glycolide, ε-caprolactone glycolide, ε-caprolactone, ε-propiolactone, δ-butyrolactone, β-butyrolactone, γ-butyrolactone, pivalolactone, δ-valerolactone, and the like.

There is no particular limitation on the method for synthesizing the polylactic acid resin used in the present invention, and the resin may be synthesized using a conventionally known method. For example, the polylactic acid resin may be synthesized by direct dehydration condensation from lactic acid monomers or by ring-opening polymerization of lactide, a cyclic dimer of lactic acid.

When direct dehydration condensation is employed, any type of lactic acid may be used, including L-lactic acid, D-lactic acid, DL-lactic acid, and mixtures thereof. When ring-opening polymerization is employed, any type of lactide may be used, including L-lactide, D-lactide, DL-lactide, meso-lactide, and mixtures thereof.

The catalyst used in the polymerization reaction for obtaining the above polylactic acid resin is not particularly limited, and a known catalyst for lactic acid polymerization may be used. Examples thereof include tin-based compounds such as tin lactate, tin tartrate, tin dicaprylate, tin dilaurate, tin dipalmitate, tin distearate, tin dioleate, tin α-naphthoate, tin β-naphthoate, and tin octanoate; powdered tin; tin oxide; zinc powder; zinc halides; zinc oxide; organozinc compounds; titanium-based compounds such as tetrapropyl titanate; zirconium-based compounds such as zirconium isopropoxide; antimony-based compounds such as antimony trioxide; bismuth-based compounds such as bismuth(III) oxide; aluminum-based compounds such as aluminum oxide and aluminum isopropoxide; and the like.

Among these, catalysts composed of tin or tin compounds are particularly preferred in terms of activity. The amount of the above catalyst used is, for example, in the case of ring-opening polymerization, about 0.001 to 5 parts by mass relative to 100 parts by mass of lactide.

The polymerization reaction may be carried out in the presence of the above catalyst, typically at a temperature of 100°C to 220°C, although this may vary depending on the type of catalyst used. It is also preferable to perform two-step polymerization disclosed in JP H7-247345A, for example.

The foregoing description has focused on the case in which polylactic acid resin is used as the above-described biodegradable resin; however, the biodegradable resin used in the present invention is not limited to polylactic acid resin, and any biodegradable resin may be used.

In the composition of the present invention, the above-described biodegradable resin may, if necessary, be blended with a general-purpose resin other a than biodegradable resin to, for example, improve impact strength. Elastic resins, such as ethylene-propylene copolymer rubber and ethylene-propylene-diene copolymers, are preferably used as such general-purpose resins.

The content of the biodegradable resin in the composition of the present invention is preferably 60 parts by mass or more, more preferably 65 parts by mass or more, even more preferably 70 parts by mass or more, and particularly preferably 75 parts by mass or more, relative to 100 parts by mass of the composition. This allows the plasticizer and the biodegradable resin to be sufficiently compatible with each other.

The content of the biodegradable resin in the composition of the present invention is preferably 99 parts by mass or less, more preferably 95 parts by mass or less, even more preferably 90 parts by mass or less, and particularly preferably 85 parts by mass or less, relative to 100 parts by mass of the composition. This allows the plasticizing effect of the plasticizer to be sufficiently achieved.

The content of the plasticizer in the composition of the present invention is preferably 1 part by mass or more, more preferably 5 parts by mass or more, even more preferably 10 parts by mass or more, and particularly preferably 15 parts by mass or more, relative to 100 parts by mass of the biodegradable resin. This allows the plasticizing effect of the plasticizer to be sufficiently achieved.

The content of the plasticizer in the composition of the present invention is preferably 50 parts by mass or less, more preferably 30 parts by mass or less, even more preferably 25 parts by mass or less, and particularly preferably 20 parts by mass or less, relative to 100 parts by mass of the biodegradable resin. This allows the plasticizer and the biodegradable resin to be sufficiently compatible with each other.

The content of the plasticizer in the composition of the present invention is preferably 1 part by mass or more, more preferably 5 parts by mass or more, even more preferably 10 parts by mass or more, and particularly preferably 15 parts by mass or more, relative to 100 parts by mass of the composition. This allows the plasticizing effect of the plasticizer to be sufficiently achieved.

The content of the plasticizer in the composition of the present invention is preferably 50 parts by mass or less, more preferably 30 parts by mass or less, even more preferably 25 parts by mass or less, and particularly preferably 20 parts by mass or less, relative to 100 parts by mass of the composition. This allows the plasticizer and the biodegradable resin to be sufficiently compatible with each other.

The composition of the present invention may additionally contain an optional component together with the plasticizer of the present invention.

Examples of such an optional component that may be contained in the composition of the present invention will be described below.

It is preferable to add, if necessary, various additives typically used for each type of resin to the composition of the present invention in order to stabilize the composition. Examples of such additives include an antioxidant, such as a phenolic antioxidant, a sulfur-based antioxidant, and a phosphorus-based antioxidant, an ultraviolet absorber, a hindered amine-based light stabilizer, and the like.

Examples of the phenolic antioxidant include 2,6-di-tert-butyl-p-cresol, 2,6-diphenyl-4-octadecyloxyphenol, stearyl(3,5-di-tert-butyl-4-hydroxyphenyl)propionate, distearyl(3,5-di-tert-butyl-4-hydroxybenzyl)phosphonate, tridecyl-3,5-di-tert-butyl-4-hydroxybenzyl thioacetate, thiodiethylene bis[(3,5-di-tert-butyl-4-hydroxyphenyl)propionate], 4,4'-thiobis(6-tert-butyl-m-cresol), 2-octylthio-4,6-di(3,5-di-tert-butyl-4-hydroxyphenoxy)-s-triazine, 2,2'-methylenebis(4-methyl-6-tert-butylphenol), bis[3,3-bis(4-hydroxy-3-tert-butylphenyl)butyric acid]glycol ester, 4,4'-butylidenebis(4,6-di-tert-butylphenol), 2,2'-ethylidenebis(4,6-di-tert-butylphenol), 1,1,3-tris(2-methyl-4-hydroxy-5-tert-butylphenyl)butane, bis[2-tert-butyl-4-methyl-6-(2-hydroxy-3-tert-butyl-5-methylbenzyl)phenyl]terephthalate, 1,3,5-tris(2,6-dimethyl-3-hydroxy-4-tert-butylbenzyl)isocyanurate, 1,3,5-tris(3,5-di-tert-butyl-4-hydroxybenzyl)isocyanurate, 1,3,5-tris(3,5-di-tert-butyl-4-hydroxybenzyl)-2,4,6-trimethylbenzene, 1,3,5-tris[(3,5-di-tert-butyl-4-hydroxyphenyl)propionyloxyethyl]isocyanurate, pentaerythritol tetrakis[3-(3,5-di-tert-butyl-4-hydroxyphenyl)propionate], 2-tert-butyl-4-methyl-6-(2-acryloyloxy-3-tert-butyl-5-methylbenzyl)phenol, 3,9-bis[2-(3-tert-butyl-4-hydroxy-5-methylhydrocinnamoyloxy)-1,1-dimethylethyl]-2,4,8,10-t etraoxaspiro[5,5]undecane], triethylene glycol bis(β-(3-tert-butyl-4-hydroxy-5-methylphenyl)propionate), and the like.

The amount of the phenolic antioxidant used is preferably 0.001 to 10 parts by mass, and more preferably 0.01 to 5 parts by mass, relative to 100 parts by mass of the biodegradable resin.

Examples of the sulfur-based antioxidant include dialkyl thiodipropionates such as dilauryl thiodipropionate, dimyristyl thiodipropionate, and distearyl thiodipropionate; β-alkylmercaptopropionic acid esters of polyols, such as pentaerythritol tetra(β-dodecyl mercaptopropionate); and the like.

The amount of the sulfur-based antioxidant used is preferably 0.001 to 10 parts by mass, and more preferably 0.01 to 5 parts by mass, relative to 100 parts by mass of the biodegradable resin.

Examples of the phosphorus-based antioxidant include trisnonylphenyl phosphite, tris(2,4-di-tert-butylphenyl)phosphite, tris[2-tert-butyl-4-(3-tert-butyl-4-hydroxy-5-methylphenylthio)-5-methylphenyl]phosphite, tridecyl phosphite, octyldiphenyl phosphite, didecylmonophenyl phosphite, bis(tridecyl)pentaerythritol diphosphite, bis(nonylphenyl)pentaerythritol diphosphite, bis(2,4-di-tert-butylphenyl)pentaerythritol diphosphite, bis(2,6-di-tert-butyl-4-methylphenyl)pentaerythritol diphosphite, bis(2,4,6-tri-tert-butylphenyl)pentaerythritol diphosphite, bis(2,4-dicumylphenyl)pentaerythritol diphosphite, tetrakis(tridecyl)isopropylidenediphenol diphosphite, tetrakis(tridecyl)-4,4'-n-butylidenebis(2-tert-butyl-5-methylphenol)diphosphite, hexakis(tridecyl)-1,1,3-tris(2-methyl-4-hydroxy-5-tert-butylphenyl)butane triphosphite, tetrakis(2,4-di-tert-butylphenyl)biphenylene diphosphonite, 9,10-dihydro-9-oxa-10-phosphaphenanthrene-10-oxide, 2,2'-methylenebis(4,6-tert-butylphenyl)-2-ethylhexyl phosphite, 2,2'-methylenebis(4,6-tert-butylphenyl)-octadecyl phosphite, 2,2'-ethylidenebis(4,6-di-tert-butylphenyl)fluorophosphite, tris(2-[(2,4,8,10-tetrakis-tert-butyldibenzo[d,f][1,3,2]dioxaphosphepin-6-yl)oxy]ethyl)amine, phosphites of 2-ethyl-2-butyl propylene glycol and 2,4,6-tri-tert-butylphenol, and the like.

The amount of the phosphorus-based antioxidant used is preferably 0.001 to 10 parts by mass, and more preferably 0.01 to 5 parts by mass, relative to 100 parts by mass of the biodegradable resin.

Among these antioxidants, phenolic antioxidants and phosphorus-based antioxidants are particularly suitable for use because they prevent discoloration of the biodegradable resin.

Examples of the ultraviolet absorber include 2-hydroxybenzophenones such as 2,4-dihydroxy benzophenone, 2-hydroxy-4-methoxy benzophenone, 2-hydroxy-4-octoxy benzophenone, 2-hydroxy-4-tert-butyl-4'-(2-methacryloyloxyethoxyethoxy)benzophenone, and 5,5'-methylenebis(2-hydroxy-4-methoxybenzophenone); 2-(2'-hydroxyphenyl)benzotriazoles such as 2-(2'-hydroxy-5'-methylphenyl)benzotriazole, 2-(2'-hydroxy-5'-tert-octylphenyl)benzotriazole, 2-(2'-hydroxy-3',5'-di-tert-butylphenyl)-5-chlorobenzotriazole, 2-(2'-hydroxy-3'-tert-butyl-5'-methylphenyl)-5-chlorobenzotriazole, 2-(2'-hydroxy-3'-dodecyl-5'-methylphenyl)benzotriazole, 2-(2'-hydroxy-3'-tert-butyl-5'-C₇₋₉ mixed alkoxycarbonylethylphenyl)triazole, 2-(2'-hydroxy-3',5'-dicumylphenyl)benzotriazole, and polyethylene glycol esters of 2-(2'-hydroxy-3'-tert-butyl-5'-carboxyphenyl)benzotriazole; triaryltriazines such as 2-(2-hydroxy-4-hexyloxyphenyl)-4,6-diphenyl-1,3,5-triazine, 2-(2-hydroxy-4-methoxyphenyl)-4,6-diphenyl-1,3,5-triazine, 2-(2-hydroxy-4-octoxyphenyl)-4,6-bis(2,4-dimethylphenyl)-1,3,5-triazine, 2-(2-hydroxy-4-acryloyloxyethoxyphenyl)-4,6-bis(2,4-dimethylphenyl)-1,3,5-triazine, 2-(2-hydroxy-4-(2-ethylhexyloyloxyethoxyphenyl)-4,6-bis(2,4-dimethylphenyl)-1,3,5-triazine, and 2-(2-hydroxy-4-propoxy-5-methylphenyl)-4,6-bis(2,4-di-tert-butylphenyl)-1,3,5-triazine; benzoates such as phenyl salicylate, resorcinol monobenzoate, 2,4-di-tert-butylphenyl-3,5-di-tert-butyl-4-hydroxybenzoate, 2,4-di-tert-amylphenyl-3,5-di-tert-butyl-4-hydroxybenzoate, and hexadecyl-3,5-di-tert-butyl-4-hydroxybenzoate; substituted oxanilides such as 2-ethyl-2'-ethoxyoxanilide and 2-ethoxy-4'-dodecyloxanilide; cyanoacrylates such as ethyl-α-cyano-β,β-diphenylacrylate and methyl-2-cyano-3-methyl-3-(p-methoxyphenyl)acrylate; and the like.

The amount of the ultraviolet absorber used is preferably 0.001 to 10 parts by mass, and more preferably 0.01 to 5 parts by mass, relative to 100 parts by mass of the biodegradable resin.

Examples of the hindered amine-based light stabilizer include: 2,2,6,6-tetramethyl-4-piperidylstearate, 1,2,2,6,6-pentamethyl-4-piperidylstearate, 2,2,6,6-tetramethyl-4-piperidylbenzoate, bis(2,2,6,6-tetramethyl-4-piperidyl)sebacate, bis(1,2,2,6,6-pentamethyl-4-piperidyl)sebacate, bis(1-octoxy-2,2,6,6-tetramethyl-4-piperidyl)sebacate, 1,2,2,6,6-pentamethyl-4-piperidylmethacrylate, 2,2,6,6-tetramethyl-piperidylmethacrylate, tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, bis(2,2,6,6-tetramethyl-4-piperidyl)-bis(tridecyl)-1,2,3,4-butanetetracarboxylate, bis(1,2,2,6,6-pentamethyl-4-piperidyl)-bis(tridecyl)-1,2,3,4-butanetetracarboxylate, bis(1,2,2,6,6-pentamethyl-4-piperidyl)-2-butyl-2-(3,5-di-tert-butyl-4-hydroxybenzyl)malonate, 3,9-bis(1,1-dimethyl-2-[tris(2,2,6,6-tetramethyl-4-piperidyloxycarbonyloxy)butylcarbonyloxy ]ethyl)-2,4,8,10-tetraoxaspiro[5.5]undecane, 3,9-bis(1,1-dimethyl-2-[tris(1,2,2,6,6-pentamethyl-4-piperidyloxycarbonyloxy)butylcarbonylo xy]ethyl)-2,4,8,10-tetraoxaspiro[5.5]undecane, a 1,6-bis(2,2,6,6-tetramethyl-4-piperidylamino)hexane/2,4-dichloro-6-morpholino-s-triazine polycondensate, a 1,6-bis(2,2,6,6-tetramethyl-4-piperidylamino)hexane/2,4-dichloro-6-tert-octylamino-s-triazine polycondensate, 1,5,8,12-tetrakis[2,4-bis(N-butyl-N-(2,2,6,6-tetramethyl-4-piperidyl)amino)-s-triazin-6-yl]-1, 5,8,12-tetraazadodecane, 1,5,8,12-tetrakis[2,4-bis(N-butyl-N-(1,2,2,6,6-pentamethyl-4-piperidyl)amino)-s-triazin-6-yl]-1,5,8,12-tetraazadodecane, 1,6,11-tris[2,4-bis(N-butyl-N-(2,2,6,6-tetramethyl-4-piperidyl)amino)-s-triazin-6-ylamino]und ecane, 1,6,11-tris[2,4-bis(N-butyl-N-(1,2,2,6,6-pentamethyl-4-piperidyl)amino)-s-triazin-6-ylamino] undecane, a 1-(2-hydroxyethyl)-2,2,6,6-tetramethyl-4-piperidinol/diethyl succinate polycondensate, a 1,6-bis(2,2,6,6-tetramethyl-4-piperidylamino)hexane/dibromoethane polycondensate, and the like.

The amount of the hindered amine-based light stabilizer used is preferably 0.001 to 10 parts by mass, and more preferably 0.01 to 5 parts by mass, relative to 100 parts by mass of the biodegradable resin.

The composition of the present invention may further contain, if necessary, additives that are typically used in synthetic resins, such as, for example, a processing aid, a cross-linking agent, an antistatic agent, an antifog agent, a plate-out preventing agent, a surface treating agent, a plasticizer other than the plasticizer of the present invention, a filler, a lubricant, a nucleating agent, a clarifying agent, a reinforcement material, a flame retardant, a fluorescent agent, a fungicide, a bactericide, a foaming agent, a metal deactivating agent, a mold release agent, a pigment, silicone oil, a silane coupling agent, and the like, as long as the effects of the present invention are not impaired.

As methods for adding the above optional components, for example, the following methods may be employed: a method in which an optional component is added to the biodegradable resin separately from the plasticizer of the present invention; a method in which the plasticizer is premixed at a desired ratio with granulation aids such as a binder, wax, a solvent, silica, and the like, which are used if necessary, and the resulting mixture is granulated to form a one-pack composite additive, which is subsequently added to the biodegradable resin; and a method in which a masterbatch containing the plasticizer of the present invention and the above optional components is prepared and added to the biodegradable resin.

There is no particular limitation on the timing of blending the plasticizer of the present invention and the optional components into the composition of the present invention. For example, two or more components selected from blending components other than the biodegradable resin may be combined into a one-pack composite additive and then added to the biodegradable resin, or components other than the biodegradable resin may be sequentially added to the biodegradable resin. When a plurality of components are combined into a one-pack composite additive, the components may be individually pulverized before mixing or may be mixed before pulverization. When the biodegradable resin is a polymer blend, the components other than the biodegradable resin may be added to a pre-blended compound, or may be added during the blending process.

There is no particular limitation on the method for producing the composition of the present invention, and a known method may be employed. Specific production methods include the following methods: mixing using an ordinary blender, mixer, or the like; melt-kneading using an extruder or the like; mixing with a solvent, followed by solution casting; and the like.

There is no particular limitation on the shape of the composition of the present invention, and the composition may be used in various shapes. Examples include shapes of pellets, granules, powder, lumps, flakes, strands, and the like. From the viewpoint of ease of handling, the composition is preferably pellet-shaped or granule-shaped.

### Shaped Article

The shaped article of the present invention is obtained by shaping the above-described composition. The method for shaping the composition is not particularly limited and may be appropriately selected according to the intended application. Examples include injection molding, extrusion molding, co-extrusion molding, blow molding, press forming, casting, roll forming, vacuum forming, rotational molding, calendering, slush molding, dip molding, foam molding, additive manufacturing, T-die casting, inflation molding, thermoforming, and the like.

There is no particular limitation on the application of the shaped article of the present invention, and the shaped article may be used in various applications. For example, it can be utilized in various applications such as daily necessities, packaging materials, agricultural components, electrical and electronic components, mechanical parts, optical devices, building materials, and automotive components.

The shaped article of the present invention can be used, for example, in a wide variety of industrial fields, including electric, electronic, and communication fields; agriculture, forestry, and fishery; mining; construction; food; fibers; clothing; medical care; coal; petroleum; rubber; leather; automobiles; precision equipment; wood materials; building materials; civil engineering; furniture; printing; musical instruments; and the like. Specifically, the composition and the shaped article obtained therefrom, of the present invention can be used for window envelopes, plastic envelopes, twist wrapping, printed laminated paper, laminated bags, labels, garbage bags, plastic bags, heavy-duty bags, sanitary materials, general packaging, etc., overwrapping, tableware containers, blister packs, clear cases, trays, boards, cushioning materials, slit yarns, sandbags, flexible container bags, ropes, strings, packaging bands, fishing lines, woven and knitted fabrics, nets, filters, clothing, industrial materials, braided cords, spun yarns, multi-ply yarns, interior materials, wadding, staple fiber nonwoven fabrics, agricultural materials, horticultural materials, civil engineering materials, bags, carpet backing, bag-making materials, packaging materials, daily-use materials, household goods, electronic and office automation equipment housings, automotive interior materials, bottles, and the like.

While the embodiments of the present invention have been described above, these are merely illustrative examples of the present invention, and various configurations other than those may be adopted. Furthermore, the present invention is not limited to the above-described embodiments, and variations, improvements, and the like that fall within the scope of achieving the object of the present invention are also encompassed by the present invention.

### Examples

Hereinafter, the present invention will be described in greater detail using examples and comparative examples. The materials, substances, blending amounts and ratios, operations, and the like described in the following examples may be modified as appropriate without deviating from the gist of the present invention. Accordingly, the present invention is not limited to the following examples in any respect. Unless otherwise specified, the blending amounts of components described in the following examples are based on mass.

Details of the components used in the examples and comparative examples are as follows:
Biodegradable resin: polylactic acid resin (trade name: Ingeo 2003D, manufactured by NatureWorks LLC., weight-average molecular weight: 180,000, melt mass-flow rate [210°C, under a load of 2.16 kg]: 6 g/10 min);
Plasticizer 1: main component: dipropylene glycol dibenzoate (content: 99.2%, hydroxyl value: 2 mg KOH/g);
Plasticizer 2: main component: dipropylene glycol dibenzoate (content: 93.6%, hydroxyl value: 15 mg KOH/g);
Plasticizer 3: main component: diethylene glycol dibenzoate (content: 99.0%, hydroxyl value: 2 mg KOH/g);
Plasticizer 4: main component: diethylene glycol dibenzoate (content: 92.9%, hydroxyl value: 15 mg KOH/g);
Comparative plasticizer C1: main component: dipropylene glycol dibenzoate (content: 86.4%, hydroxyl value: 32 mg KOH/g);
Comparative plasticizer C2: main component: diethylene glycol dibenzoate (content: 85.7%, hydroxyl value: 30 mg KOH/g);
Comparative plasticizer C3: main component: bis[2-(2-butoxyethoxy)ethyl] adipate (content: 99.0%, hydroxyl value: 2 mg KOH/g); and
Comparative plasticizer C4: main component: bis[2-(2-butoxyethoxy)ethyl] adipate (content: 84.5%, hydroxyl value: 30 mg KOH/g).

### Evaluation of Heat Resistance

The heat resistance of the plasticizers 1 to 4 and the comparative plasticizers C1 and C2 was evaluated using a thermogravimetric/differential thermal analyzer (device name: Thermo plus EVO, manufactured by Rigaku Corporation). Approximately 10 mg of each plasticizer was accurately weighed and subjected to heating from 30°C to 400°C under the conditions of a nitrogen atmosphere and a heating rate of 10°C/min. During heating, the percentage of weight loss (wt%) was measured, and the temperature (°C) at which the weight decreased by 5 wt% from the initial weight at the start of the measurement was determined. This temperature is referred to as the 5% weight loss temperature. Table 1 shows the results.

**[Table 1]**

| | 5% Weight loss temperature |
|---|---|
| Plasticizer 1 | 245°C |
| Plasticizer 2 | 230°C |
| Plasticizer 3 | 241°C |
| Plasticizer 4 | 228°C |
| Comparative plasticizer C1 | 208°C |
| Comparative plasticizer C2 | 204°C |

Based on the results shown in Table 1, the plasticizers of the present invention exhibited higher 5% weight loss temperatures compared to the comparative plasticizers. This confirms that the plasticizers of the present invention have superior heat resistance.

### Examples 1 to 13 and Comparative Examples 1 to 11

### Production of Compositions

Components were melt-kneaded at the ratios shown in Tables 2 and 3 to obtain resin strands. The melt-kneading was performed using a device in which Labo Plastomill (manufactured by Toyo Seiki Seisaku-sho, Ltd.) was connected to a twin-screw segmented extruder (device name: 2D30W2), under the conditions of a melt temperature of 220°C and a screw speed of 40 rpm. The obtained resin strands were cut using a pelletizer to obtain a pellet-shaped composition.

### Production of Films

A cast film having a thickness of 200 µm was produced using the pellet-shaped composition obtained above. The film was produced using a device in which Labo Plastomill µ (manufactured by Toyo Seiki Seisaku-sho, Ltd.) was connected to a single-screw extruder (device name: D1220B) and a T-die (device name: MT60B), under the conditions of a melt temperature of 210°C, a screw speed of 20 rpm, a T-die extrusion temperature of 210°C, a chill roll temperature of 30°C, and a roll rotation speed of 0.30 to 0.35 m/min. The resulting film was allowed to stand for 48 hours under the conditions of 23°C and 50% RH, and was then subjected to the evaluations described below.

### Plasticity Evaluation 1: Tensile Elongation

Test specimens in the shape of JIS No. 5 dumbbells were punched out from the film obtained above, with the machine direction (MD) of the film oriented vertically. The tensile elongation (%) was measured in conformity with JIS K7127 under the conditions of a test speed of 100 mm/min, a distance between chucks of 80 mm, and a gauge length of 25 mm. Tables 2 and 3 show the results.

### Plasticity Evaluation 2: Glass Transition Temperature

The glass transition temperature (Tg) was measured using a differential scanning calorimeter (DSC-EVO, manufactured by Rigaku Corporation). A 4-mg sample was cut from the film obtained above and subjected to heating from -20°C to 190°C under the conditions of a nitrogen atmosphere and a heating rate of 10°C/min, and Tg was determined from the DSC curve using a midpoint method. Tables 2 and 3 show the results.

**[Table 2]**

| | | Example | | | | | | | | | | | | |
|---|---|---|---|---|---|---|---|---|---|---|---|---|---|---|
| | | 1 | 2 | 3 | 4 | 5 | 6 | 7 | 8 | 9 | 10 | 11 | 12 | 13 |
| Resin | Biodegradable resin | 90 | 85 | 80 | 75 | 90 | 85 | 80 | 90 | 85 | 80 | 90 | 85 | 80 |
| Plasticizer | Plasticizer 1 | 10 | 15 | 20 | 25 | | | | | | | | | |
| | Plasticizer 2 | | | | | 10 | 15 | 20 | | | | | | |
| | Plasticizer 3 | | | | | | | | 10 | 15 | 20 | | | |
| | Plasticizer 4 | | | | | | | | | | | 10 | 15 | 20 |
| Evaluation | Tensile elongation (%) | 148 | 237 | 253 | 299 | 128 | 220 | 241 | 144 | 230 | 249 | 122 | 221 | 238 |
| | Tg (°C) | 41 | 33 | 26 | 19 | 47 | 42 | 29 | 44 | 36 | 28 | 47 | 43 | 30 |

**[Table 3]**

| | | Comparative Example | | | | | | | | | | |
|---|---|---|---|---|---|---|---|---|---|---|---|---|
| | | 1 | 2 | 3 | 4 | 5 | 6 | 7 | 8 | 9 | 10 | 11 |
| Resin | Biodegradable resin | 100 | 90 | 85 | 80 | 90 | 85 | 80 | 90 | 85 | 90 | 85 |
| Plasticizer | Comparative Plasticizer C1 | | 10 | 15 | 20 | | | | | | | |
| | Comparative Plasticizer C2 | | | | | 10 | 15 | 20 | | | | |
| | Comparative Plasticizer C3 | | | | | | | | 10 | 15 | | |
| | Comparative Plasticizer C4 | | | | | | | | | | 10 | 15 |
| Evaluation | Tensile elongation (%) | 2 | 3 | 14 | 167 | 3 | 12 | 143 | 205 | 260 | 204 | 267 |
| | Tg (°C) | 60 | 46 | 40 | 31 | 49 | 45 | 33 | 38 | 33 | 38 | 34 |

According to the plasticity evaluation results for the biodegradable resin shown in Tables 2 and 3, the compositions (Examples 1 to 13) containing the plasticizers of the present invention exhibited higher tensile elongations and lower glass transition temperatures compared to the composition (Comparative Example 1) that did not contain any plasticizer of the present invention and the compositions (Comparative Examples 2 to 7) containing dibenzoate compounds with high hydroxyl values. This confirms that the plasticizers of the present invention have superior plasticity.

In the compositions (Comparative Examples 8 to 11) containing the plasticizers that did not contain any dibenzoate compound represented by the general formula (1), no influence of differences in hydroxyl value on plasticity was observed. This indicates that the effect of the present invention is specific to plasticizers containing a dibenzoate compound represented by the general formula (1).

## Claims

1. A plasticizer comprising a dibenzoate compound represented by a general formula (1) below,
the plasticizer having a hydroxyl value of 0.1 to 20 mg KOH/g, and
the plasticizer being for use in a biodegradable resin: 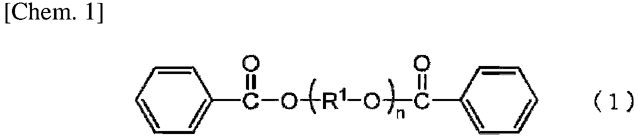
where R¹ represents an alkanediyl group having 1 to 8 carbon atoms, and n represents an integer of 1 to 8.

2. The plasticizer according to claim 1,
wherein R¹ in the general formula (1) represents an alkylene group having 2 or 3 carbon atoms.

3. The plasticizer according to claim 1,
wherein n in the general formula (1) represents an integer of 1 to 3.

4. A composition comprising a biodegradable resin and the plasticizer according to any one of claims 1 to 3.

5. The composition according to claim 4,
wherein a content of the plasticizer is 0.1 to 50 parts by mass relative to 100 parts by mass of the biodegradable resin.

6. A shaped article obtained from the composition according to claim 4.
